(19) Europäisches Patentamt
European Patent Office
Office européen des brevets

(11) Veröffentlichungsnummer: **0 009 158**
**B1**

(12) **EUROPÄISCHE PATENTSCHRIFT**

(45) Veröffentlichungstag der Patentschrift: **28.04.82**

(51) Int. Cl.³: **C 07 C 125/063, C 07 C 155/02**

(21) Anmeldenummer: **79103246.9**

(22) Anmeldetag: **03.09.79**

# (54) Verfahren zur Herstellung von N-(3-Hydroxyphenyl)-(thiol)-carbamaten.

(30) Priorität: **14.09.78 DE 2839973**

(43) Veröffentlichungstag der Anmeldung:
**02.04.80 Patentblatt 80/7**

(45) Bekanntmachung des Hinweises auf die Patenterteilung:
**28.04.82 Patentblatt 82/17**

(84) Benannte Vertragsstaaten:
**AT BE CH DE FR GB IT LU NL SE**

(56) Entgegenhaltungen:
**DE - C - 865 444**
**US - A - 2 615 916**
**US - A - 2 734 911**
**US - A - 3 960 917**

(73) Patentinhaber: **BASF Aktiengesellschaft**
**Carl-Bosch-Strasse 38**
**D-6700 Ludwigshafen (DE)**

(72) Erfinder: **Oeser, Heinz-Guenter, Dr. Dipl.-Chem.**
**Friedrich-Burschell-Weg 19**
**D-6700 Ludwigshafen (DE)**
Erfinder: **Mangold, Dietrich, Dr. Dipl.-Chem.**
**Hermann-Walker-Strasse 49**
**D-6903 Neckargemuend (DE)**
Erfinder: **Schirmer, Ulrich, Dr. Dipl.-Chem.**
**Berghalde 79**
**D-6900 Heidelberg (DE)**
Erfinder: **Rohr, Wolfgang, Dr. Dipl.-Chem.**
**Gontardstrasse 4**
**D-6800 Mannheim 1 (DE)**
Erfinder: **Koenig, Karl-Heinz, Dr. Dipl.-Chem.**
**Pierstrasse 8 A**
**D-6710 Frankenthal (DE)**

**EP 0 009 158 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von N-(3-Hydroxyphenyl)-(thiol)-carbamaten

Gegenstand der Erfindung ist ein Verfahren zur Herstellung von N-(3-Hydroxyphenyl)-(thiol)carbamaten durch Umsetzung von 3-Hydroxy-anilinen mit Halogenkohlensäure(thiol)estern.

Es ist bekannt, daß man N-Phenyl-(thiol)carbamate durch Umsetzung von substituierten Anilinen mit Chlorkohlensäure(thiol)estern in Gegenwart säurebindender Mittel erhält. Bei der Mehrzahl dieser Umsetzungen wird überschüssiges Anilin selbst als säurebindendes Mittel eingesetzt. (Ber. *48*, 1580 (1915); J. Am. Chem. Soc. *48*, 1681 (1926); Bull. Soc. Chim. de France 1955, 1353; C.r. *240*, 1586 (1955); US—PS 2 824 872; FR—PS 1 176 912.) Hierbei fällt die Hälfte des verwendeten Anilins als Hydrochlorid an, das nur nach aufwendiger Überführung in die freie Base wieder umgesetzt werden kann.

Ebenso kann die Reaktion zwischen substituierten Anilinen und Chlorkohlensäure(thiol)estern in wasserfreiem Medium und in Gegenwart von tertiären Aminen, wie z.B. Pyridin, durchgeführt werden (Khim. Nauka i. Prom., Band 3, Seite 683 (1958); Journal of Organic Chemistry, Band 4, Seite 207 (1939)). Von Nachteil ist auch hier die kostspielige Regeneration der tertiären Amine.

Aus der DE—OS 1 643 763 ist ein Verfahren zur Herstellung von N-Hydroxyphenyl(thio)-carbamaten aus Aminophenolen und Chlor(thiol)kohlensäureestern in Gegenwart von basischen Verbindungen der Elemente der ersten und zweiten Gruppe des Periodischen Systems als säurebindende Mittel bekannt. Die Umsetzung wird in einem inerten organischen Lösungsmittel in Abwesenheit von Wasser durchgeführt.

N-(3-Hydroxyphenyl)-carbamate können auch durch Umsetzung von 3-Aminophenol mit Chlorkohlensäureestern in einem Essigester/Wasser-Gemisch (1:1) unter Zusatz von Magnesiumoxid erhalten werden (DE—AS 15 67 151). Dieses Zweiphasenmedium erfordert ein gutes Durchmischen des Reaktionsansatzes. Das Endprodukt ist nach beendeter Umsetzung in der organischen Phase gelöst und kann erst nach dem Trocknen der Phase und nach dem Abdestillieren des Lösungsmittels rein gewonnen werden.

Weiterhin ist die Umsetzung von N-Alkylethylendiaminen oder Chloranilinen mit Halogenkohlensäure(thiol)estern in Gegenwart von Alkali und Wasser bekannt (US—A—3 960 917; US—A—2 734 911). Die Umsetzungen werden bei einer Temperatur im Bereich zwischen 0°C und Raumtemperatur bzw. 0 und 15°C durchgeführt, wobei es bei der Umsetzung der Chloraniline bei höheren Temperaturen zur Bildung von Nebenprodukten kommt.

Es wurde nun gefunden, daß man N-(3-Hydroxyphenyl)-(thiol)-carbamate der Formel I

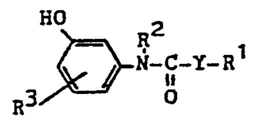

I

in der

$R^1$ einen aliphatischen, cycloaliphatischen, araliphatischen oder aromatischen Rest,

$R^2$ Wasserstoff oder einen unverzweigten oder verzweigten Alkylrest,

$R^3$ Wasserstoff, Halogen, die Nitrogruppe, die Cyanogruppe, einen aliphatischen, cycloaliphatischen, araliphatischen oder aromatischen Rest und

Y Sauerstoff oder Schwefel bedeuten,

durch Umsetzung von 3-Hydroxyanilinen der Formel II

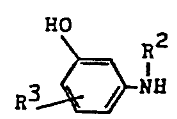

II

in der

$R^2$ und $R^3$ die oben genannten Bedeutungen haben,

mit Halogenkohlensäure(thiol)estern der Formel III

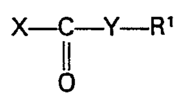

III

in der

$R^1$ und Y die oben genannten Bedeutungen haben und

X für Halogen steht,

in Gegenwart einer basischen Verbindung eines Alkalimetalls oder eines Erdalkalimetalls erhält, wenn man die Umsetzung in wäßrigem Medium durchführt.

Das erfindungsgemäße Verfaheren liefert N-(3-Hydroxyphenyl)(thiol)carbamate in guter Ausbeute und Reinheit auf einfachem und wirtschaftlichem Wege. Das war keineswegs zu erwarten, da

bekannt ist, daß 3-Hydroxyaniline in alkalischen Medium sehr oxidationsempfindlich sind, so daß mit stark gefärbten und verunreinigten Reaktionsprodukten zu rechnen war (Am. Chem. J. *15*, 40 (1893); Monatshefte für Chemie *10*, 126—129 (1889)). Es ist außerdem überraschend, daß die Umsetzung nach dem erfindungsgemäßen Verfahren auch bei einer Temperatur bis zu 70°C in guter Ausbeute gelingt und die nach US—A—2 734 911 zu erwartenden Nebenprodukte selbst bei Verwendung oxidationsempfindlicher m-Aminophenole nicht gebildet werden. Trotz exothermer Reaktion ist eine äußere Kühlung des Reaktionsgemisches entbehrlich.

Außerdem ist es überraschend, daß die Hydrolyse der Chlorkohlensäureester, insbesondere bei Umsetzungen mit äquimolaren Mengen an Anilin, nicht zu Ausbeuteverminderungen führt.

Die Umsetzung läßt sich für den Fall der Verwendung von 3-Aminophenol und Chlorkohlensäureäthylester durch die folgende Reaktionsgleichung wiedergeben:

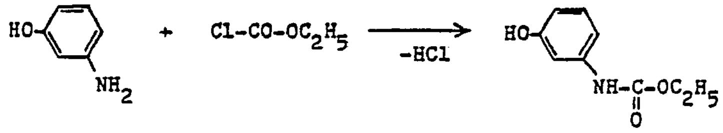


Als basische Verbindungen der Alkalimetalle oder der Erdalkalimetalle kommen beispielsweise Hydroxide, Carbonate, Hydrogencarbonate, Oxide, Acetate, Alkoholate, Amide, Salze schwacher oder mehrbasischer Säuren, vorzugsweise von Natrium, Kalium oder Calcium in Betracht. Geeignet sind beispielsweise Natriumhydroxid, Natriumacetate, Kaliumcarbonat, Natriumcarbonat, Kaliumhydrogencarbonat, insbesondere Natriumhydrogencarbonat.

Die basischen Verbindungen binden der freiwerdenden Halogenwasserstoff und können entsprechend in stöchiometrischer Menge oder im Überschuß, beispielsweise in bis zu zweifachem Überschuß, bezogen auf Halogenkohlensäure(thiol)ester, eingesetzt werden.

Geeignete 3-Hydroxyaniline der Formel II sind solche, bei denen $R^2$ Wasserstoff oder einen unverzweigten oder verzweigten Alkylrest mit 1 bis 8 Kohlenstoffatomen, vorzugsweise mit 1 bis 4 Kohlenstoffatomen, bedeutet. $R^3$ bedeutet dabei Wasserstoff, Halogen, vorzugsweise Chlor oder Fluor, die Nitrogruppe, die Cyanogruppe, einen aliphatischen Rest, beispielsweise einen unverzweigten oder verzweigten Alkyl-, Alkenyl- oder Alkinylrest mit bis zu 4 Kohlenstoffatomen, einen cycloaliphatischen Rest, beispielsweise einen Cycloalkylrest mit bis zu 6 Kohlenstoffatomen, einen araliphatischen Rest, beispielsweise einen Phenylalkylrest, vorzugsweise Benzyl oder Phenäthyl, oder einen aromatischen Rest, beispielsweise einen Arylrest mit bis zu 10 Kohlenstoffatomen, vorzugsweise Phenyl.

Als Halogenkohlensäure(thiol)ester der Formel III kommen solche in Betracht, bei denen $R^1$ einen aliphatischen Rest, beispielsweise einen unverzweigten oder verzweigten Alkyl-, Alkenyl- oder Alkinylrest mit bis zu 8 Kohlenstoffatomen, vorzugsweise mit bis zu 4 Kohlenstoffatomen, einen cycloaliphatischen Rest, beispielsweise einen Cycloalkylrest mit bis zu 6 Kohlenstoffatomen, einen araliphatischen Rest mit bis zu 4 Kohlenstoffatomen im aliphatischen Rest, vorzugsweise Phenylalkylreste mit bis zu 10 Kohlenstoffatomen, insbesondere Benzyl oder Phenäthyl, oder einen aromatischen Rest, beispielsweise Arylreste mit bis zu 14 Kohlenstoffatomen, wie Phenyl, Naphthyl, Anthryl. $R^1$ bedeutet vorzugsweise Alkyl mit 1 bis 4 Kohlenstoffatomen, wie Methyl, Äthyl, Propyl, Isopropyl, n-Butyl, Isobutyl, sec.-Butyl. X in Formel III steht dabei für Halogen, insbesondere Chlor oder Brom.

Es können beispielsweise folgende Halogenkohlensäure(thiol)ester als Ausgangsstoffe III verwendet werden: Methyl-, Äthyl, Isopropyl-, Isobutenyl-, 1-Methyl-propin-2-yl-, Cyclohexyl-, Benzyl-, Phenylester der Chlor- oder Brom(thio)kohlensäure.

Zweckmäßigerweise wird die Umsetzung mit einem Molverhältnis 3-Hydroxyanilin:Halogenkohlensäure(thiol)ester von 1:1 bis 1:2 durchgeführt. Die Temperatur kann dabei im Bereich zwischen 0 und 70°C liegen. Vorzugsweise arbeitet man zwischen 20 und 45°C. Die Umsetzung kann drucklos oder unter Druck, kontinuierlich oder diskontinuierlich durchgeführt werden.

Die Reaktion kann wie folgt durchgeführt werden: Ein Gemisch von 3-Hydroxyanilin der Formel II, basischer Verbindung und Wasser wird vorgelegt und unter Temperaturkontrolle langsam mit dem Halogenkohlensäure(thiol)ester der Formel III versetzt. Die Wassermenge pro Mol 3-Hydroxyanilin beträgt 0,5 bis 2,0 l. Anschließend wird der Reaktionsansatz 2 bis 24 Stunden bei der Reaktionstemperatur gehalten, das Produkt wird dann abgesaugt und getrocknet.

Die nach dem Verfahren herstellbaren Verbindungen sind Pflanzenschutzmittel und wertvolle Ausgangsstoffe für die Herstellung von Pflanzenschutzmitteln, beispielsweise von herbiziden Diurethanen.

## Beispiel 1

In 800 Gewichtsteilen Wasser werden 84 Gewichtsteile Natriumhydrogencarbonat und 109 Gewichtsteile 3-Aminophenol vorgelegt. Hierzu werden innerhalb von 3 Stunden unter Rühren und Kühlen 110 Gewichtsteile Chlorameisensäureäthylester gegeben. Anschließend wird 12 Stunden bei Raumtemperatur gerührt, der ausgefallene weiße Niederschlag abgesaugt und getrocknet. Man erhält 178 Gewichtsteile N-(3-Hydroxyphenyl)-carbaminsäureäthylester vom Fp. 88 bis 90°C; Ausbeute: 99% d.Th.

Beispiel 2

Analog Beispiel 1 erhält man aus 109 Gewichtsteilen 3-Aminophenol und 96 Gewichtsteilen Chlorameisensäuremethylester 164,5 Gewichtsteile N-(3-Hydroxyphenyl)-carbaminsäuremethylester vom Fp. 94 bis 96°C; Ausbeute: 98.5% d.Th.

Beispiel 3

Analog Beispiel 1 erhält man aus 54,5 Gewichtsteilen 3-Aminophenol und 56 Gewichtsteilen Thiolchlorkohlensäuremethylester 88,1 Gewichtsteile N-(3-Hydroxyphenyl)-S-methylthiolcarbamat vom Fp. 137—9°C; Ausbeute: 96,3% d.Th.

Beispiel 4

Analog Beispiel 1 erhält man aus 109 Gewichtsteilen 3-Aminophenol, 109 Gewichtsteilen Chlorameisensäureäthylester und 100 Teilen Kaliumhydrogencarbonat 138 Gewichtsteile N-(3-Hydroxyphenyl)-carbaminsäureäthylester vom Fp. 86—90°C; Ausbeute: 76,2% d.Th.

Beispiel 5

Analog Beispiel 1 erhält man aus 109 Gewichtsteilen 3-Aminophenol, 109 Gewichtsteilen Chlorameisensäureäthylester und 69 Gewichtsteilen Kaliumcarbonat 167 Gewichtsteile N-(3-Hydroxyphenyl)-carbaminsäureäthylester vom Fp. 87—90°C; Ausbeute: 92,3% d.Th.

Beispiel 6

Analog Beispiel 1 erhält man aus 109 Gewichtsteilen 3-Aminophenol, 109 Gewichtsteilen Chlorameisensäureäthylester und 52,5 Gewichtsteilen Natriumcarbonat 170 Gewichtsteile N-(3-Hydroxyphenyl)-carbaminsäureäthylester vom Fp. 87—90°C; Ausbeute: 93,9% d.Th.

**Patentansprüche**

1. Verfahren zur Herstellung von N-(3-Hydroxyphenyl)-(thiol)carbamaten der Formel I

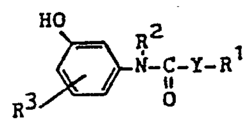

I

in der

$R^1$ einen aliphatischen, cycloaliphatischen, araliphatischen oder aromatischen Rest,

$R^2$ Wasserstoff oder einen unverzweigten oder verzweigten Alkylrest,

$R^3$ Wasserstoff, Halogen, die Nitrogruppe, die Cyanogruppe, einen aliphatischen, cycloaliphatischen, araliphatischen oder aromatischen Rest und

Y Sauerstoff oder Schwefel bedeuten,

durch Umsetzung von 3-Hydroxyanilinen der Formel II

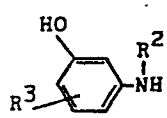

II

in der

$R^2$ und $R^3$ die oben genannten Bedeutungen haben,

mit Halogenkohlensäure(thiol)estern der Formel III

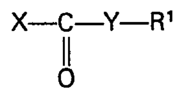

in der

$R^1$ und Y die oben genannten Bedeutungen haben und X für Halogen steht,

in Gegenwart einer basischen Verbindung eines Alkalimetalls oder eines Erdalkalimetalls, dadurch gekennzeichnet, daß die Umsetzung in wäßrigem Medium durchgeführt wird.

2. Verfahren zur Herstellung von N-(3-Hydroxyphenol)-(thiol)carbamaten nach Anspruch 1, dadurch gekennzeichnet, daß die Umsetzung bei einer Temperatur im Bereich zwischen 0 und 70°C durchgeführt wird.

## Claims

1 A process for the production of N-(3-hydroxyphenyl)-(thiol)carbamates of the formula I

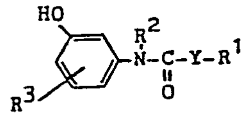

I

where

$R^1$ is an aliphatic, cycloaliphatic, araliphatic or aromatic radical,

$R^2$ is hydrogen or linear or branched alkyl,

$R^3$ is hydrogen, halogen, nitro, cyano or an aliphatic, cycloaliphatic, araliphatic or aromatic radical, and

Y is oxygen or sulphur

by reacting a 3-hydroxyaniline of the formula II

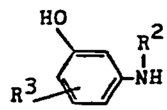

II,

where

$R^2$ and $R^3$ have the above meanings, with halogen carbonic acid (thiol)esters of the formula III

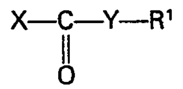

III,

where

$R^1$ and Y have the above meanings and X denotes halogen, in the presence of a basic compound of an alkali metal or alkaline earth metal, characterized in that the reaction is carried out in aqueous medium.

2. A process for the production of N-(3-hydroxyphenyl)-(thiol)carbamates as claimed in claim 1, characterized in that the reaction is carried out at a temperature of from 0° to 70°C.

## Revendications

1. Procédé de préparation de N-(3-hydroxyphényl)-(thiol)carbamate de formule I

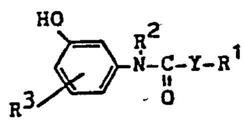

I

dans laquelle

$R^1$ représente un reste aliphatique, cycloaliphatique, araliphatique ou aromatique,

$R^2$ l'hydrogène ou un reste alkyle ramifié ou non,

$R^3$ l'hydrogène, un halogène, le groupe nitro, le groupe cyano, un reste aliphatique, cycloaliphatique, araliphatique ou aromatique et

Y l'oxygène ou le soufre

par réaction de 3-hydroxyanilines de formule II

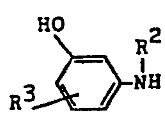

II

dans laquelle

$R^2$ et $R^3$ ont les significations sus-indiquées avec les (thiol)esters d'acide halogénocarbonique de formule III

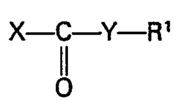

dans laquelle

$R^1$ et Y ont les significations sus-indiquées et X représente un halogène

en présence d'un composé basique d'un métal alcalin ou alcalino-terreux, caractérisé par le fait que la réaction est effectuée en milieu aqueux.

2. Procédé de préparation de N-(3-hydroxyphényl)-(thiol)carbamate selon la revendication 1, caractérisé par le fait que la réaction est effectuée à une température comprise entre 0 et 70°C.